(19) Europäisches Patentamt / European Patent Office / Office européen des brevets

(11) **EP 4 390 449 A1**

(12) **DEMANDE DE BREVET EUROPEEN**

(43) Date de publication:
**26.06.2024 Bulletin 2024/26**

(21) Numéro de dépôt: **23219454.8**

(22) Date de dépôt: **21.12.2023**

(51) Classification Internationale des Brevets (IPC):
**G01S 7/481** (2006.01)  **G01S 7/4914** (2020.01)
**G01S 7/4915** (2020.01)  **G01S 7/4912** (2020.01)
**G01S 17/34** (2020.01)  **G01S 17/42** (2006.01)

(52) Classification Coopérative des Brevets (CPC):
**G01S 17/34; G01S 7/4816; G01S 7/4914;
G01S 7/4915; G01S 7/4917; G01S 17/42**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **22.12.2022 FR 2214276**

(71) Demandeur: **COMMISSARIAT À L'ÉNERGIE
ATOMIQUE ET AUX
ÉNERGIES ALTERNATIVES
75015 Paris (FR)**

(72) Inventeurs:
• **DAAMI, Anis
38054 GRENOBLE CEDEX 09 (FR)**
• **FREY, Laurent
38054 GRENOBLE CEDEX 09 (FR)**
• **SEGURA PUCHADES, Josep
38054 GRENOBLE CEDEX 09 (FR)**

(74) Mandataire: **Atout PI Laplace
Immeuble Up On
25 Boulevard Romain Rolland
CS 40072
75685 Paris Cedex 14 (FR)**

(54) **LIDAR COHÉRENT À MODULATION DE FRÉQUENCE À TRAITEMENT AMÉLIORÉ**

(57) L'invention concerne un système lidar cohérent (10) comprenant :
- une source laser (SL) configurée pour générer un rayonnement laser (L) avec une fréquence optique laser $f_{opt-l}$ variant linéairement sur une pluralité de N plages de fréquence successives indicées i,
- un premier dispositif optique (DO1) configuré pour séparer spatialement le rayonnement laser (L),
- un dispositif de détection (Det),
- un deuxième dispositif optique (DO2) configuré pour fournir simultanément audit pixel un faisceau recombiné (Lrecomb),
- un dispositif de décalage de fréquence (FSD) disposé sur le trajet du faisceau de référence et configuré pour décaler la fréquence optique laser d'une fréquence de décalage (fd0) comprise dans l'intervalle $[f_{Rmax}, f_{Rmin}]$,
- une unité de traitement (UT),
- le système d'imagerie lidar cohérent étant en outre configuré pour déterminer une information de distance à partir d'un signal détecté (Spix) par ledit pixel (P).

FIG.9

**Description**

**DOMAINE DE L'INVENTION**

La présente invention concerne le domaine de l'imagerie active et notamment l'imagerie de scène en 3 dimensions (distance et éventuellement vitesse radiale des objets). Plus particulièrement l'invention concerne les lidars cohérents à modulation de fréquence pour déterminer une information de distance, et le cas échéant de vitesse des points d'une scène à observer.

**ETAT DE LA TECHNIQUE**

La mesure d'une distance implique d'utiliser une source lumineuse pour illuminer la scène et un détecteur (plus généralement un capteur d'image) ayant la capacité de codifier les valeurs de distance (et/ou de vitesse) afin d'obtenir une information tridimensionnelle de toute la scène observée. Plus spécifiquement à tout point (x,y) de la scène, un valeur de profondeur (z) et éventuellement une valeur de vitesse ($v_Z$) lui sont attribués, de manière à obtenir une carte de profondeur $z = f(x,y)$. et éventuellement une cartographie des vitesses radiales $v_z = g(x, y)$.

Plusieurs techniques d'imagerie active existent dans la littérature. On pourra citer les techniques de la lumière structurée, le temps de vol direct et indirect. Nous nous intéressons ici plutôt aux techniques utilisant une source lumineuse cohérente (Laser) et déviant une partie du faisceau (faisceau oscillateur local) afin de l'utiliser comme amplificateur du signal rétro-diffusé par la scène une fois celle-ci-illuminée (point par point ou globalement, voir plus loin) par le reste du faisceau non détourné.

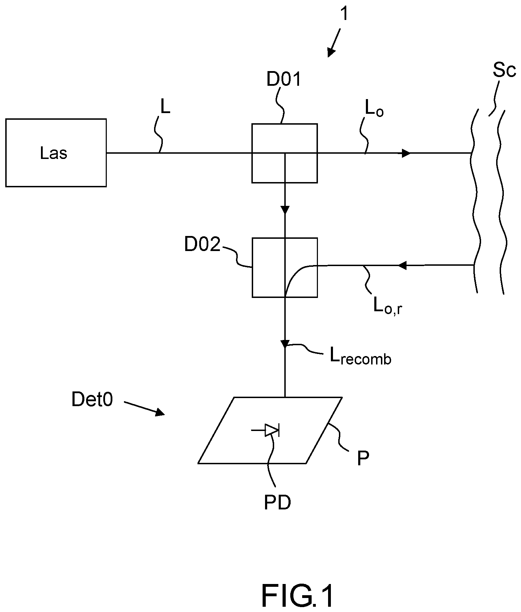

Le principe d'un lidar cohérent est bien connu de l'état de la technique et illustré figure 1. Un lidar cohérent 1 comprend une source cohérente, typiquement un laser Las, qui émet une onde lumineuse cohérente modulée en fréquence L (domaine IR, visible ou UV proche) et un dispositif de détection Det0 comprenant au moins un pixel P comprenant un composant photo-détecteur PD. Un dispositif d'émission illumine un volume de l'espace, et un dispositif de réception, collecte une fraction de l'onde lumineuse rétrodiffusée par une scène ou une cible à observer. A la réception on effectue un mélange entre l'onde lumineuse rétrodiffusée et une partie de l'onde émise qui n'est pas passée par la scène, dénommée « oscillateur local ». L'interférence de ces deux ondes est détectée par le photo-détecteur, et le signal électrique en sortie du détecteur présente un terme oscillant proportionnel au produit de la puissance d'oscillateur local par la puissance du signal rétrodiffusé de la scène. Ce signal est numérisé et on en extrait une information de distance et/ou de vitesse. Le décalage de fréquence Doppler de l'onde rétrodiffusée est fonction de la vitesse radiale du point ayant rétrodiffusé l'onde:

Le lidar 1 comprend ainsi un premier dispositif optique DO1 configuré pour séparer spatialement le rayonnement laser L en un faisceau de référence Lref (oscillateur local) et un faisceau objet Lo dirigé vers une scène à observer Sc. Le lidar 1 comprend également un deuxième dispositif optique DO2 configuré pour fournir simultanément au pixel P un faisceau recombiné Lrecomb correspondant à une superposition du faisceau de référence Lref et d'un faisceau réfléchi par la scène Lo,r lorsqu'elle est illuminée par le faisceau objet. Le système d'imagerie lidar cohérent est en outre configuré pour déterminer une information de distance à partir d'un signal détecté Spix par le pixel P.

Sur la figure 1, un seul pixel est représenté mais le détecteur Det0 peut en pratique comporter un grand nombre de pixels, disposés en ligne ou en matrice.

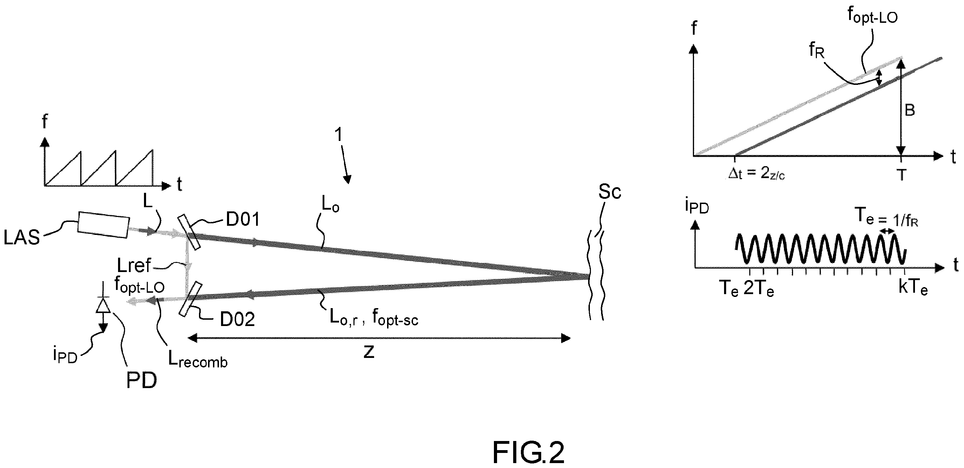

Les lidars cohérents à modulation de fréquence, couramment dénommés lidar FMCW (de l'anglais « Frequency Modulated Continous Wave ») permettant de déterminer une carte de profondeurs sont connus. La figure 2 illustre de manière schématique la mise en oeuvre du lidar FMCW 1 connu de l'état de la technique.

La source laser LAS est configurée pour émettre un rayonnement laser L avec une fréquence optique $f_{opt-LO}$ variant linéairement sur au moins une plage de fréquence de largeur B pendant une durée T, tel qu'illustré figure 2. B est couramment dénommé « chirp ». L'onde rétrodiffusée, qui a parcouru deux fois la distance z du lidar 2 à la scène, présente une fréquence $f_{opt-sc}$.

Les deux voies qui interfèrent (Lref de fréquence $f_{opt-LO}$ et Lo,r de fréquence $f_{opt-sc}$) sur le photo-détecteur produisent des battements dont la fréquence est proportionnelle au retard $\Delta t$ entre les deux voies, donc à la distance z. Ces battements se retrouvent dans le signal électrique détecté $i_{PD}$.

Plus précisément, pour une rampe linéaire, la fréquence des oscillations est :

$$f_R = \frac{2Bz}{cT} \qquad (1)$$

avec B l'excursion de fréquence optique ou « chirp » pendant la durée T de la rampe, c la vitesse de la lumière.

On peut déduire la distance z du nombre k ($k \approx Tf_R$) de périodes mesurées pendant la durée T (méthode dite de comptage) :

$$Z \approx \frac{kc}{2B}.$$

La résolution en distance du lidar est

$$\delta Z \approx \frac{c}{2B}. \quad (1\text{bis})$$

Il est également possible de mesurer $f_R$ par analyse spectrale par transformée de Fourier du signal de battements (méthode dite FFT).

Pour faire une image complète de la scène, un premier type de lidar FMCW connu illumine séquentiellement la scène à l'aide d'un dispositif de balayage et le faisceau recombiné est détecté par un photodétecteur unique. En pratique, il est difficile d'accéder à une acquisition des images de distance à cadence vidéo (typiquement 50Hz) pour des images de haute résolution (par exemple VGA ou XGA) car le temps disponible pour la mesure de distance en chaque point est très court.

Ainsi, un deuxième type de lidar FMCW connu, tel que décrit dans le document WO2021144357 et illustré figure 3, permet une acquisition en parallèle des informations issues des points de la scène par un nombre important de pixels. Le photo-détecteur unique est remplacé par un imageur matriciel 41 où chaque pixel Pij contient un photorécepteur PDij qui détecte l'information correspondant à l'image d'un point de la scène, l'image étant réalisée par une optique adaptée. Le faisceau Lo se dirigeant vers la scène éclaire toute la surface visée en une seule fois sans balayage aucun. Le faisceau oscillateur local Lref est aussi adapté pour éclairer toute la surface de l'imageur. La distance étant proportionnelle à la fréquence de battement du signal hétérodyne, il est donc nécessaire de mesurer cette fréquence sur chaque pixel si on veut obtenir l'information de distance de toute la scène simultanément. Typiquement la mesure peut s'effectuer simultanément pour tous les pixels (mode « global shutter ») ou ligne par ligne (mode « rolling schutter »).

Le lidar 3 du document précité comprend la source laser LAS modulée temporellement par la rampe périodique d'excursion B et de durée T précitée, et la longueur de cohérence du rayonnement laser est au moins deux fois supérieure à la distance prédéterminée maximale zmax entre la scène à observer Sc et le lidar 3.

Le lidar 3 comprend également un dispositif optique DS, dit séparateur correspondant au premier dispositif optique DO1 précité.

Le deuxième dispositif optique DO2 comprend un dispositif optique de recombinaison DR adapté pour superposer spatialement le faisceau de référence Lref au faisceau réfléchi par la scène Lo,r, de manière à former le faisceau recombiné. Le deuxième dispositif optique DO2 comprend également un système optique d'imagerie Im d'axe optique AO (diaphragme Diaph) qui réalise une image de la scène en imageant le faisceau réfléchi par la scène Lo,r sur le détecteur 41. La scène étant typiquement à une distance largement plus grande que la focale de l'optique Im, le détecteur 41 est placé sensiblement dans le plan focal de l'optique Im.

Les dispositifs optiques DO1 et DO2 sont configurés de sorte que chaque pixel Pij du détecteur reçoive une portion du faisceau image issu de la scène dénommée Lo,r/pix et une portion du faisceau de référence dénommée Lref/pix, et que les portions soient superposées spatialement sur chaque pixel. Préférentiellement ces dispositifs sont configurés, par exemple avec l'ajout d'une optique additionnelle Si (non représentée), pour transporter le faisceau de référence depuis la source laser jusqu'à un plan image intermédiaire PI, perpendiculaire à l'axe optique AO du système optique d'imagerie Im, de façon à réaliser une source de référence cohérente (virtuelle ou réelle) avec le faisceau réfléchi. Le plan intermédiaire PI est situé à proximité du système optique d'imagerie, de manière à générer des franges en teinte plate, obtenues par interférence entre la portion du faisceau réfléchi détectée Lo,r/pix et la portion du faisceau de référence détectée Lref/pix, sur chaque pixel Pij éclairé. Pour simplifier on assimile la portion de faisceau illuminant un pixel à la portion de faisceau détectée par le photo-détecteur de ce pixel. Cette condition de teinte plate implique que, sur chaque pixel Pij, un axe de propagation de la portion Lo,r/pix du faisceau réfléchi soit colinéaire ou sensiblement colinéaire à un axe de propagation de la portion Lref/pix du faisceau de référence. Une image intermédiaire PS virtuelle ou réelle du faisceau de référence est formée dans le plan image intermédiaire PI, le plan PI étant disposé de manière à générer des franges en teinte plate, obtenues par interférence entre les portions, sur chaque pixel éclairé.

Le système d'imagerie lidar cohérent 3 comprenant en outre au moins un circuit électronique de traitement configuré pour calculer, pour chaque pixel Pij, une fréquence F(i,j) du battement de la portion du faisceau image avec la portion du faisceau de référence illuminant le pixel.

Enfin le lidar 3 comprend une unité de traitement UT reliée à la source laser et au détecteur 41, et configurée pour déterminer une distance de points de la scène imagés sur les pixels, à partir de la fréquence de battement calculée et associée à chaque pixel et à partir de la fréquence optique modulée du rayonnement laser. Le circuit de traitement peut être localisé dans chaque pixel, selon une ligne ou une colonne, ou dans l'unité de traitement UT.

Le fait de disposer d'un oscillateur local pour chaque pixel permet d'avoir une image de chaque point de la scène simultanément. Ainsi, l'architecture du lidar 3 intégrant un détecteur matriciel est compatible d'un grand nombre de pixels (pas de balayage) permettant de réaliser une image lidar à haute résolution. Le mélange hétérodyne s'effectue ici dans chaque pixel.

Dans le lidar 3, B et T sont constantes. Pour détecter un point à une distance z comprise entre zmin et zmax, la fréquence $f_R$ doit pouvoir être mesurée sur toute l'étendue de la plage $\Delta f_R$ allant de $f_{Rmin}$ définie par zmin à $f_{Rmax}$ définie par zmax. $\Delta f_R$ est donc la plage de fréquence du signal à mesurer et :

$$\Delta f_R = 2.B.(zmax-zmin) / c.T \qquad (2)$$

Lorsque la plage de distance à mesurer augmente, $\Delta f_R$ augmente, ce qui implique d'augmenter la bande passante du ou des circuits d'amplification de $i_{PD}$, ce qui augmente le bruit et la consommation de ces circuits. Cela augmente également le bruit photonique de la composante continue de $i_{PD}$ et diminue le rapport signal sur bruit. En effet de manière connue le rapport signal sur bruit est inversement proportionnel à $\sqrt{\Delta f_R}$. Une diminution du rapport signal sur bruit peut conduire à un mauvais comptage en raison du bruit.

En outre, de manière générale, une difficulté persiste concernant la mesure de la fréquence du signal de battement. Que ce soit pour la méthode FFT ou la méthode de comptage, il faut intégrer une électronique compliquée et assez dense dans chaque pixel. Ceci a pour conséquence de ne pas pouvoir accéder à des imageurs de type « global shutter » vu le nombre de transistors MOS à faire rentrer dans la surface d'un seul pixel. Même dans le cas d'un imageur de type « rolling shutter » ou une partie de l'électronique est mise en pied de colonne, il est aussi difficile d'atteindre la cadence vidéo avec ce genre de solution.

Un but de la présente invention est de remédier aux inconvénients précités en proposant un système d'imagerie lidar cohérent permettant un allégement de la l'électronique de détection nécessaire à la mesure de la fréquence du signal hétérodyne et une amélioration du rapport signal sur bruit.

**DESCRIPTION DE L'INVENTION**

La présente invention a pour objet un système lidar cohérent comprenant :

- une source laser configurée pour générer un rayonnement laser avec une fréquence optique laser $f_{opt-I}$ variant linéairement sur une pluralité de N plages de fréquence successives indicées i, avec N supérieur ou égal à 2, une plage de fréquence présentant une largeur Bi et une durée Ti, une somme de toutes lesdites plages de fréquence correspondant à une durée globale, une valeur absolue d'un rapport Bi/Ti étant différente pour chaque plage de fréquence,
- un premier dispositif optique configuré pour séparer spatialement le rayonnement laser en un faisceau de référence et un faisceau objet dirigé vers une scène à observer,
- un dispositif de détection comprenant au moins un pixel comprenant un composant photo-détecteur,
- un deuxième dispositif optique configuré pour fournir simultanément audit pixel un faisceau recombiné (Lrecomb) correspondant à une superposition du faisceau de référence et d'un faisceau réfléchi par la scène lorsqu'elle est illuminée par le faisceau objet,
- un dispositif de décalage de fréquence disposé sur le trajet du faisceau de référence et configuré pour décaler la fréquence optique laser d'une fréquence de décalage comprise dans l'intervalle [$f_{Rmax}$, $f_{Rmin}$], avec $f_{Rmax}$ et $f_{Rmin}$ correspondant respectivement à une fréquence hétérodyne de battement associée à une distance maximum de mesure et à une distance minimum de mesure en l'absence dudit dispositif de décalage de fréquence,
- une unité de traitement configurée pour piloter la source laser et reliée au dispositif de détection,
- le système d'imagerie lidar cohérent étant en outre configuré pour déterminer une information de distance à partir d'un signal détecté par ledit pixel, l'information de distance étant déterminée à partir des valeurs $Bi_0$ et $Ti_0$ de la plage de fréquence optique laser appliquée au moment où une fréquence de battement du signal détecté est annulée ou minimisée.

Selon un mode de réalisation, chaque plage de fréquence indicée i correspond à une plage de distance du capteur à la scène Δzi allant de $z_{mini}$ à $z_{maxi}$ avec $z_{mini} < z_{maxi}$, et dans lequel les rapports Bi/Ki sont déterminés de sorte que pour i allant de 1 à N-1, on a :

$$Z_{max_i} = Z_{min_{i+1}}$$

avec :

$$Ki = \frac{z_{max_i}}{z_{min_i}}$$ Selon un mode de réalisation, les durées Ti sont toutes identiques

Selon un mode de réalisation, les largeurs Bi vérifient la relation :

$B_i = K. B_{i+1}$ K réel supérieur à 1

Selon un mode de réalisation, le système lidar cohérent selon l'invention comprend en outre un dispositif de balayage configuré pour éclairer point par point ou ligne par ligne la scène avec le faisceau objet.

Selon un autre mode de réalisation, la source laser et/ou le premier dispositif optique sont configurés pour illuminer l'ensemble de la scène, le détecteur comprend une pluralité de pixels répartis en matrice, et le deuxième dispositif optique est configuré pour superposer, au niveau du photo-détecteur de chaque pixel, le faisceau référence et le faisceau réfléchi par la scène selon une direction de propagation sensiblement identique.

Selon un mode de réalisation, le dispositif de décalage de fréquence comprend au moins un modulateur acousto-optique (AOM) fonctionnant dans l'ordre -1.

Selon un mode de réalisation, une modulation sur la plage de fréquence i est dénommée sous-phase i, et chaque pixel comprend un circuit de lecture (CL) couplé au photodétecteur (PD), le circuit de lecture comprenant :

- un intégrateur (INTEG) qui intègre, à chaque sous phase, un signal de référence (REF) détecté par le pixel lorsque le faisceau laser n'est pas modulé en fréquence et le signal pixel détecté pendant ladite sous-phase,

- un comparateur (COMP) qui compare le signal de référence intégré (REF') et le signal pixel intégré (Spix'), et bascule à l'état haut lorsque le signal pixel intégré est différent du signal référence intégré, et

- un bloc logique (CLOG) qui fournit l'adresse (Xadd, Yadd) dudit pixel lorsque le comparateur est à l'état haut.

Selon un autre aspect, l'invention concerne une méthode d'acquisition de distance d'un système lidar cohérent à une scène, comprenant les étapes consistant à :

- **A** générer un rayonnement laser avec une fréquence optique laser $f_{opt-l}$ variant linéairement sur une pluralité de N plages de fréquence successives indicées i, une plage de fréquence présentant une largeur Bi et une durée Ti, une somme de toutes lesdites plages de fréquence correspondant à une durée globale, une valeur absolue d'un rapport Bi/Ti étant différente pour chaque plage de fréquence,

- **B** séparer spatialement le rayonnement laser en un faisceau de référence (Lref) et un faisceau objet dirigé vers une scène à observer,

- **C** illuminer la scène avec le faisceau objet,

- **D** décaler la fréquence optique laser du faisceau de référence d'une fréquence de décalage comprise dans l'intervalle $[f_{Rmax}, f_{Rmin}]$, avec $f_{Rmax}$ et $f_{Rmin}$ correspondant respectivement à une fréquence hétérodyne de battement associée à une distance maximum de mesure et à une distance minimum de mesure en l'absence dudit décalage de la fréquence optique laser dudit faisceau de référence,

- **E** fournir simultanément à au moins un pixel d'un dispositif de détection, un faisceau recombiné correspondant à une superposition du faisceau de référence et d'un faisceau réfléchi par la scène, détecter ledit faisceau recombiné et générer un signal détecté,

- **F** déterminer, à partir du signal détecté, un moment où une fréquence de battement du signal détecté est annulée ou minimisée,

- **G** déterminer des valeurs $Bi_0$ et $Ti_0$ de la plage de la fréquence optique laser appliquée audit moment,

- **H** déterminer une information de distance à partir desdites valeurs $Bi_0$ et $Ti_0$.

Selon un mode de réalisation, une modulation sur la plage de fréquence i est dénommée sous-phase i, et à l'étape **A** la fréquence optique du rayonnement laser généré n'est pas modulée pendant une durée T0 antérieure aux durées Ti, et à l'étape **E** on détecte un signal dit de référence pendant la durée T0, et l'étape **F** comprend une sous étape de comparaison dans laquelle, pour chaque sous phase, on compare le signal de référence intégré et le signal détecté intégré pendant ladite sous phase.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :

La figure 1 déjà citée illustre le principe d'un lidar cohérent connu.

La figure 2 déjà citée illustre le principe connu du lidar à modulation de fréquence.

La figure 3 illustre une variante connue de lidar à modulation de fréquence dans laquelle toute la scène est éclairée simultanément et le signal est détecté sur imageur comprenant plusieurs pixels.

La figure 4 illustre un premier exemple de modulation de fréquence pour un lidar dit « multichirp ».

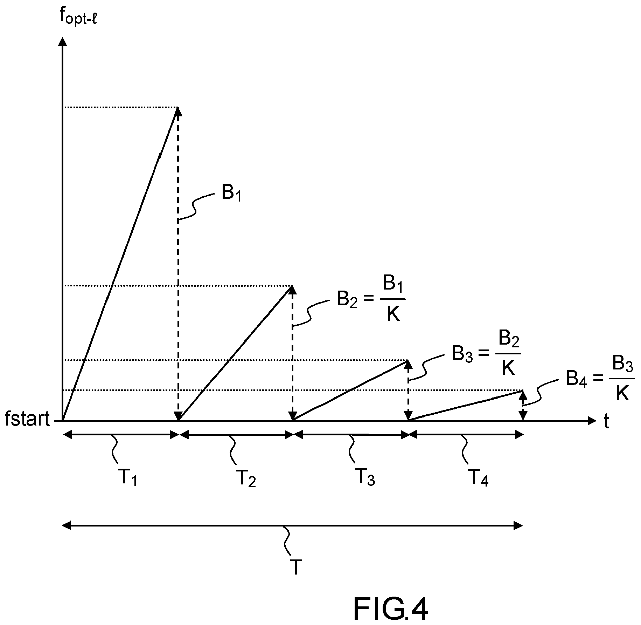

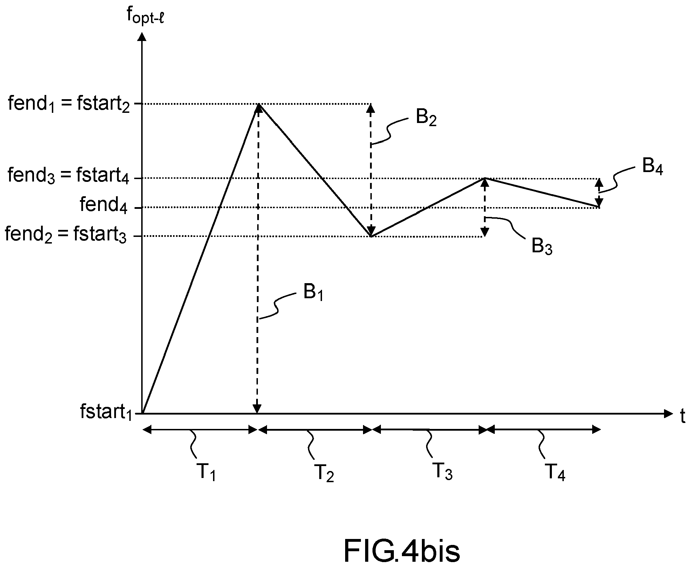

La figure 4bis illustre un deuxième exemple de modulation de fréquence pour un lidar « multichirp ».

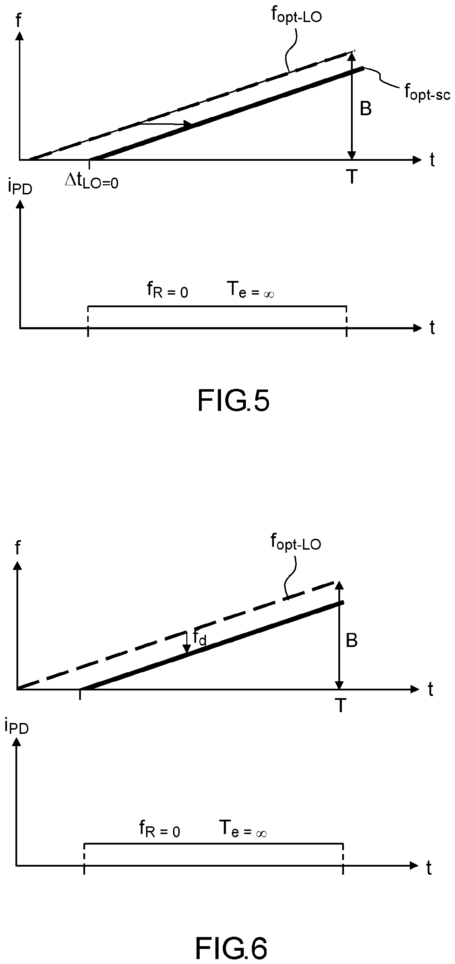

La figure 5 illustre une manière intuitive de se débarrasser de la mesure de la fréquence du signal hétérodyne pour un laser « monochirp » de paramètres (B, T) qui n'est pas réalisable.

La figure 6 une autre manière d'aplatir le signal hétérodyne consistant à décaler la fréquence optique du faisceau de référence avec une fréquence fd.

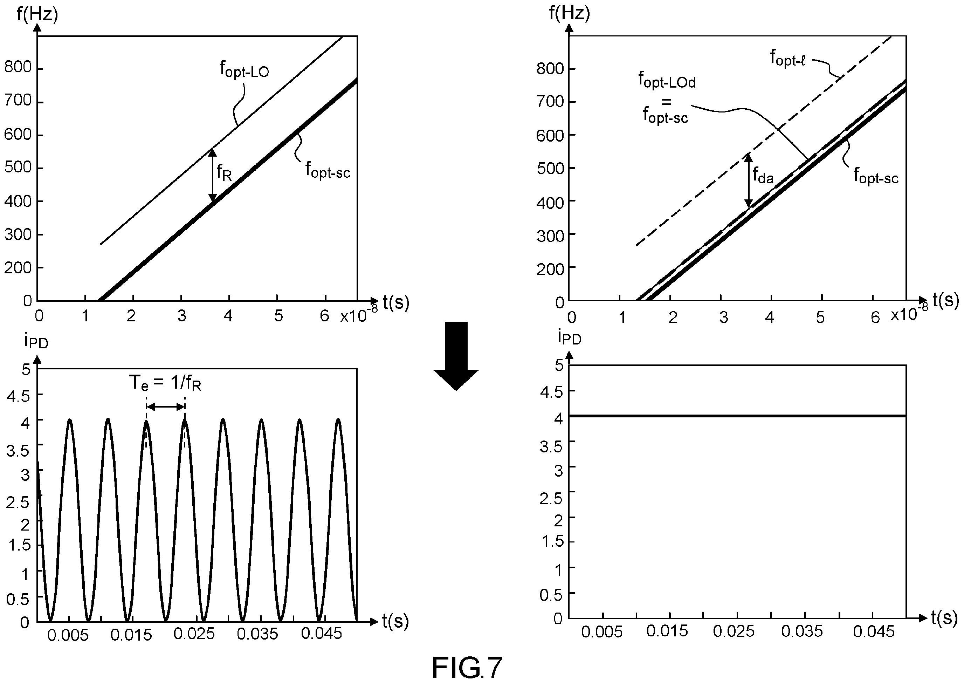

La figure 7 illustre le concept du décalage de la fréquence de l'onde issue du laser appliqué à un lidar monochirp de paramètre (B, T) d'une fréquence fd variant dans l'intervalle $[f_{Rmin} ; f_{Rmax}]$, de sorte que la différence entre la fréquence de référence et la fréquence de référence décalée couvre un ensemble de fréquences comprenant la fréquence $f_R$ à mesurer.

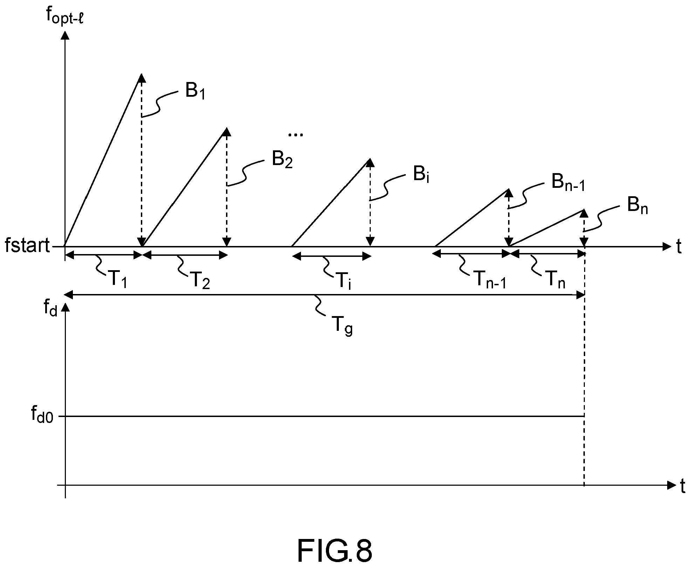

La figure 8 illustre un exemple du décalage de fréquence fd0 pour une modulation de la source laser d'un lidar « multichirp » telle qu'illustrée sur la figure 4.

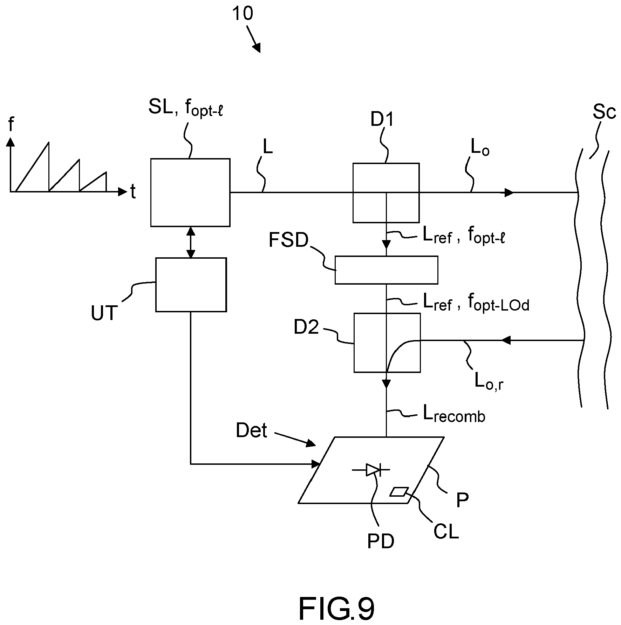

La figure 9 illustre un système lidar cohérent 10 selon l'invention.

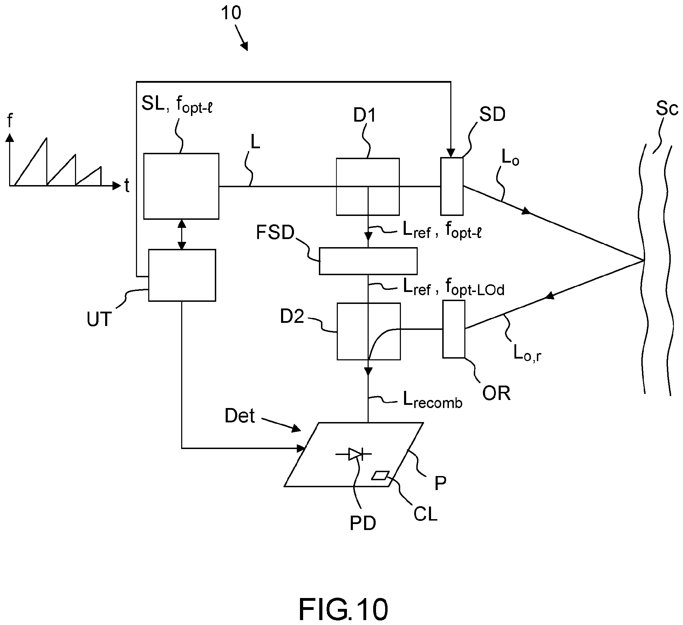

La figure 10 illustre une première variante du système cohérent selon l'invention comprenant en outre un dispositif de balayage configuré pour éclairer la scène avec le faisceau objet point par point.

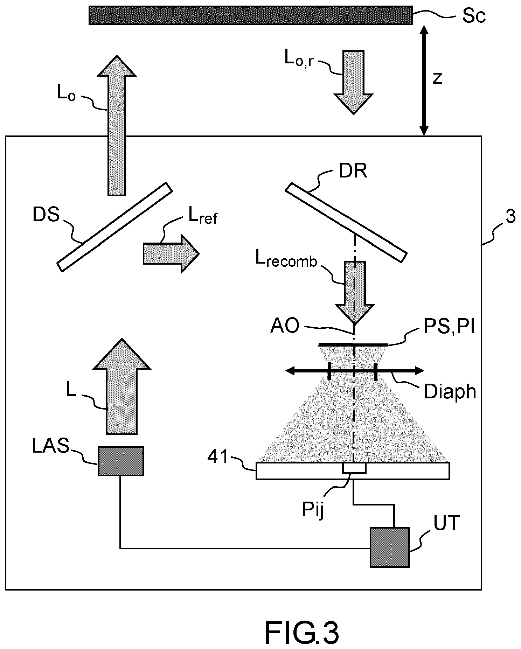

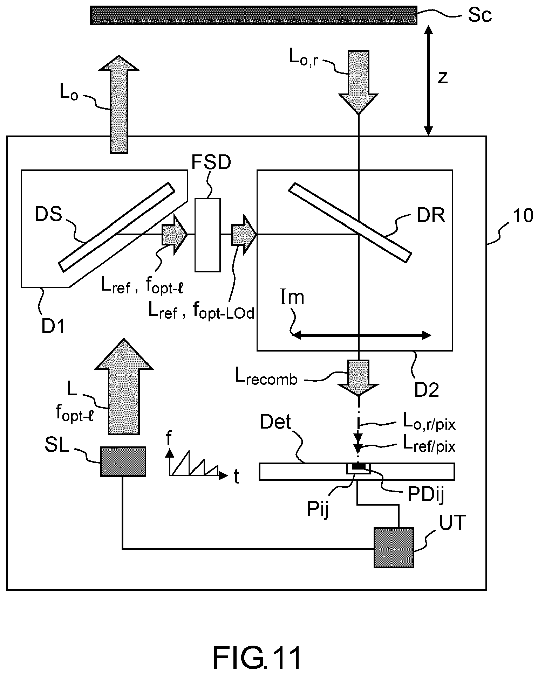

La figure 11 illustre une deuxième variante du le système lidar cohérent selon l'invention qui présente une architecture telle que décrite dans la figure 3. La source laser et/ou le premier dispositif optique D1 sont configurés pour illuminer l'ensemble de la scène, et le détecteur comprend une pluralité de pixels répartis en matrice.

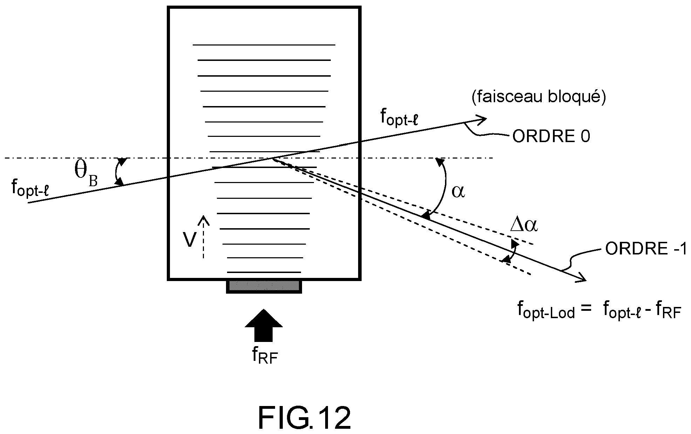

La figure 12 illustre l'utilisation d'un modulateur acousto-optique comme dispositif de décalage de fréquence.

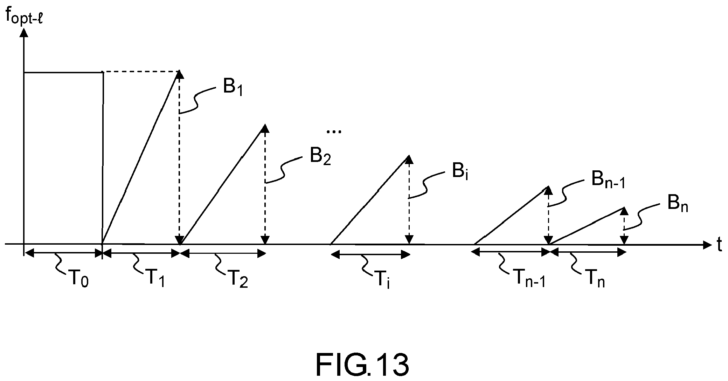

La figure 13 illustre un mode de réalisation de la modulation de fréquence de la source laser intégrant une phase de calibration

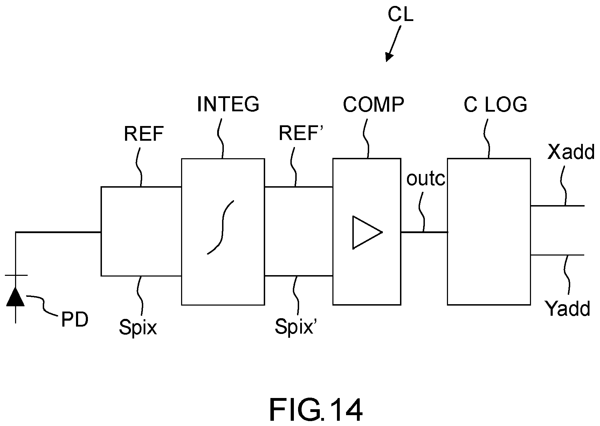

La figure 14 illustre un mode de réalisation de la détection de la fréquence nulle au niveau d'un pixel.

**DESCRIPTION DETAILLEE DE L'INVENTION**

Le document FR 2207829 (non publié au jour du dépôt de la présente demande) propose d'améliorer le rapport signal sur bruit tout en conservant la même dynamique $z_{min}$-$z_{max}$, en diminuant la bande passante $\Delta f_R$.

Pour cela, la durée globale d'acquisition T est divisée en N intervalles de durée Ti consécutifs, i allant de 1 à N, $N \geq 2$. Chaque intervalle ou sous-phase de capture Ci correspond à la fourniture d'un faisceau ayant sa fréquence optique f modulée en continu et de manière linéaire sur une plage de fréquence de largeur Bi pendant la durée Ti de cette sous-phase. En outre il est prévu que chaque sous-phase Ci corresponde à un rapport Bi/Ti différent de celle des rapports Bi/Ti des N-1 autres sous-phases.

Chaque sous phase Ci (Bi, Ti) correspond alors à une bande passante $\Delta f_{Ri}$ réduite par rapport à $\Delta f_R$ et permet de détecter des distances z comprises dans une plage $\Delta zi$ allant de $z_{mini}$ à $z_{maxi}$ avec $z_{mini} < z_{maxi}$. La bande passante de chacune des sous phases Ci s'étend d'une fréquence minimale $f_{Rmini}$ à une fréquence $f_{Rmaxi}$ :

$$\Delta f_{Ri} = f_{Rmaxi} - f_{Rmini}$$

Avec :

$$f_{Rmax_i} = \frac{2z_{max_i}B_i}{cT_i} \qquad (3)$$

et

$$f_{Rmin_i} = \frac{2z_{min_i}B_i}{cT_i} \qquad (4)$$

Et donc :

$$\Delta f_{R_i} = \frac{2\Delta z_i.B_i}{cT_i} \qquad (5)$$

Avec

$$\Delta zi = z_{maxi} - z_{mini}$$

Pour une sous phase Ci donnée et pour un pixel donné correspond une fréquence de battement $f_{Ri}$ mesurée du signal hétérodyne comprise entre $f_{Rmini}$ et $f_{Rmaxi}$ si le point associé au pixel est à une distance z du pixel comprise entre $z_{mini}$ à $z_{maxi}$ et la distance z peut être calculée avec la formule :

$$z = \frac{c.Ti.f_{Ri}}{2.Bi}$$

Un lidar présentant une telle modulation de fréquence est dénommé « lidar multichirp ».

Les rapports Bi/Ti sont déterminés de sorte que pour i allant de 1 à N-1 $z_{mini+1}$ soit sensiblement égal à $z_{maxi}$ sans être strictement supérieur à $zmax_i$.

Selon un mode de réalisation préféré, pour que les différentes phases de mesure conservent la continuité des distances (on évite ainsi un recouvrement des plages), on a préférentiellement :

$$z_{max_i} = z_{min_{i+1}} \qquad (6)$$

Pour chaque sous phase Ci (ou plage de fréquence), on définit le coefficient Ki tel que :

$$f_{Rmaxi} = Ki.f_{Rmini} \qquad (7)$$

Soit d'après les formules (3) et (4) :

$$Ki = \frac{z_{max_i}}{z_{min_i}}$$

Selon un mode réalisation, on a Ki identique pour tout i avec Ki = K, K nombre réel strictement supérieur à 1. Toutefois, dans d'autres exemples, les valeurs de Ki d'au moins deux sous-phases sont différentes.
Avec K constant cela implique :

$$f_{Rmaxi} = K.f_{Rmini}$$

pour tout i :

$$B_i = K.B_{i+1} \qquad (9)$$

et

$$\frac{z_{min_{i+1}}}{z_{min_i}} = \frac{z_{max_{i+1}}}{z_{max_i}} = K \qquad (10)$$

Soit

$$z_{max_i} = K.z_{min_i} \qquad (11)$$

Selon un mode de réalisation, les durées Ti sont choisies toutes identiques, et donc :

$$Ti = T/N.$$

Selon un mode de réalisation, on choisit $f_{Rmini}$ de même valeur pour chaque sous phase Ci, dénommée $f_{Rmax}$, et $f_{Rmaxi}$ de même valeur pour chaque sous phase Ci, dénommée $f_{Rmin}$. Cela minimise la bande passante du pixel, égale à ($f_{Rmax}$-$f_{Rmin}$). La détermination de z s'effectue en relevant l'instant pour lequel le pixel mesure une fréquence comprise dans l'intervalle [$f_{Rmin}$, $f_{Rmax}$]. Cet instant est situé dans une seule des sous-phases. Connaissant le Bi et Ti de cette sous-phase, on détermine z.
Pour K constant cela implique que les sous phases ont toutes la même fréquence $f_{Rmin}$ et la même fréqeunce $f_{Rmax}$ et donc toutes la même bande passante $\Delta f_R$.
Dans ce cas, à partir de (11) et en choisissant $z_{min} = z_{min_1}$ et $z_{max} = z_{max_N}$, on a :

$$\frac{z_{\max}}{z_{\min}} = K^N \qquad (12)$$

Avec cet ensemble d'équations, en connaissant zmin et zmax et la valeur de K, on peut déterminer N avec (12) (en prenant par exemple N entier arrondi supérieur à la valeur obtenue en appliquant le logarithme en base K de (zmax/zmin). Puis en connaissant la valeur de T on en déduit Ti = T/N.

Les Bi, zmini et zmaxi sont déterminés avec les équations :

$$B_i = \frac{B_1}{K^{i-1}} \qquad (13)$$

$$z_{min_i} = K^{i-1}.z_{min} \qquad (14)$$

$$z_{max_i} = \frac{z_{max}}{K^{N-i}} \qquad (15)$$

On choisit également la fréquence $f_{Rmin}$ (identique pour toutes le sous phases) et on en déduit :

$$B1 = \frac{f_{Rmin}c.T}{2.N.z_{min}}$$

La figure 4 illustre un premier exemple de modulation de fréquence avec K constant et Ti identiques et N=4. Dans cet exemple, la fréquence du faisceau laser est modulée à partir d'une même fréquence fstart, ce qui implique qu'à la fin de chaque sous-phase la fréquence doit être ramenée instantanément à la fréquence fstart. Cela sollicite la réponse de la source laser et son circuit de commande CCL.

La figure 4bis illustre un deuxième exemple dans lequel il n'y a pas de retour instantané de la fréquence, avec comme précédemment K constant, Ti identiques et N=4 et. Dans cet exemple, on s'arrange pour que la dernière fréquence de la sous phase $Ci$ fend$_i$ soit égale à la première fréquence de la sous phase suivante fstart$_{i+1}$.de plus dans cet exemple le signe de Bi, ou dit autrement le sens de parcours de l'excursion en fréquence Bi, change à chaque nouvelle sous-phase.

Un exemple numérique particulier va être décrit qui illustre la détermination des différents paramètres.

On prend T= 200$\mu$s ; zmin = 0.3 m (zmin = zmin$_1$) et zmax = 10m (zmax = zmax$_N$); K=2 ; $f_{Rmin}$ = 75kHz pour toutes les sous phases ; Ti toutes identiques.

La dynamique zmax/zmin = 33.33.

On en déduit :

N=5 soit Ti=40 $\mu$s.

$f_{Rmax}$ = 150 KHz et $\Delta f_R$ = 75 kHz pour chaque sous phase.

B1 = 1.5 $10^9$ Hz et la sous phase C1 permet de détecter les distance z comprises entre $z_{min1}$=0.3 m et $z_{max1}$=0.6 m.

B2 = 750.$10^6$ Hz et la sous phase C2 permet de détecter les distance z comprises entre $z_{min2}$=0.6 m et $z_{max2}$=1.2 m.

B3 = 375.$10^6$ Hz et la sous phase C3 permet de détecter les distance z comprises entre $z_{min3}$=1.2 m et $z_{max3}$=2.4 m.

B4 = 187.5.$10^6$ Hz et la sous phase C4 permet de détecter les distance z comprises entre $z_{min4}$=2.4 m et $z_{max4}$=4.8 m.

B5 = 93.75.$10^6$ Hz et la sous phase C5 permet de détecter les distance z comprises entre $z_{min5}$=4.8 m et $z_{max5}$=9.6 m.

Pour un laser monochirp de paramètres (B, T) une manière intuitive de se débarrasser de la mesure de la fréquence du signal hétérodyne serait d'avoir le même délai temporelle $\Delta t_{LO}$ sur les 2 bras LO (signal de référence Lref) et scène tel qu'illustré figure 5. Cela produirait en conséquence un signal de battement de fréquence nulle. La distance serait alors encodée dans le délai rajouté sur le bras LO comme $\Delta t_{LO} = 2z/c$. Il est évident que cette manière est quasi impossible à réaliser.

Une deuxième façon de faire pour aplatir le signal hétérodyne revient à travailler sur la fréquence optique du faisceau Lref. Pour un lidar monochirp de paramètres (B, T) ce concept, illustré figure 6, consiste à décaler la fréquence optique du faisceau Lref avec une fréquence fd de telle façon à avoir $f_{opt-LOd} = f_{opt-LO}$-fd $= f_{opt-sc}$ avec $f_{opt-LO}$ fréquence émise par le laser correspondant à la fréquence de Lref tel que décrit dans l'état de la technique. De cette manière le signal Lref de fréquence décalée $f_{opt-LOd}$ interférant avec le signal de la scène de fréquence $f_{opt-sc}$ produit un signal hétérodyne constant avec une fréquence de battement nulle qui est détecté sur l'imageur avec une électronique plus simplifiée.

Ainsi, les figures 5 et 6 explicitent la différence entre l'ajout d'un délai temporel et le décalage en fréquence optique de Lref. Les deux solutions produisent un signal hétérodyne avec une fréquence de battement nulle.

Pour clarifier les notations on dénomme à présent :

- $f_{opt-l}$ la fréquence optique émise par le laser (qui correspond à la fréquence référence/oscillateur local $f_{opt-LO}$ « classique »),

- $f_R$ une fréquence de battement de type classique tel que décrit précédemment,

- fd la fréquence de décalage,

- $f_{opt-LOd}$ la fréquence décalée du faisceau oscillateur local Lref selon l'invention, dite fréquence référence décalée,

- fs la fréquence du signal de battement issu de l'interférence de Lref de fréquence décalée $f_{opt-LOd}$ avec le signal Lo,r issu de la scène de fréquence $f_{opt-sc}$, dénommée fréquence de battement signal :

$$fs = |\ f_{opt-LOd} - f_{opt-sc}\ |$$

La fréquence de battement signal fs est déterminée à partir du signal détecté Spix par le photodétecteur.

Le concept du décalage appliqué à un lidar monochirp de paramètre (B, T) consiste à décaler (diminuer) la fréquence de l'onde issue du laser $f_{opt-l}$ (fréquence de référence « classique ») d'une fréquence fd variant dans l'intervalle $[f_{Rmin} ; f_{Rmax}]$, de sorte que la différence entre la fréquence de référence et la fréquence de référence décalée couvre un ensemble de fréquences comprenant la fréquence $f_R$ à mesurer. La fréquence $f_{opt-LOd}$ est ainsi comprise entre $[f_{opt-l}-f_{Rmax} ; f_{opt-l}- f_{Rmin}]$. Avec une fréquence de décalage fd variant dans l'intervalle $[f_{Rmin} ; f_{Rmax}]$ la fréquence de battement signal fs est annulée ou minimisée à un « instant » donné (en fait une plage temporelle pour pouvoir mesurer une fréquence).

Pour mémoire, dans le cas monochirp les fréquences de battement minimale $f_{Rmin}$ et maximale et $f_{Rmax}$ sont données par :

$$f_{Rmin(mono)} = \frac{2Bz_{min}}{cT}$$

$$f_{Rmax(mono)} = \frac{2Bz_{max}}{cT}$$

L'information de distance z est alors encodée dans la valeur de fd particulière fda correspondant à cet « instant », tel que :

$$fda| = \frac{2Bz}{cT}.$$

Ce principe est synthétisé figure 7 sur un exemple pour lequel B = 10 GHz ; T=800 ms ; z=2m. On calcule avec la formule (1) $f_R$ = 166.67 Hz.

A gauche est illustré le fonctionnement classique d'un lidar FMCW, et à droite le fonctionnement d'un lidar selon l'invention dans lequel la fréquence de Lref a été diminuée jusqu'à ce que sa valeur coïncide avec la fréquence issue de la scène $f_{opt-sc}$.

Le lidar selon l'invention est un lidar multichirp pour lequel on applique le concept de décalage précité, afin d'en améliorer les performances. Dans ce cas, on cherche à annuler la fréquence de battement fs dans une ou plusieurs sous phase suivant les distances des objets de la scène.

On souhaite mesurer la distance z avec une résolution en distance $\delta z$.

On choisit alors le coefficient K pour que la gamme de distances à mesurer corresponde à la résolution théorique du système FMCW qui est $z_{max_i} - z_{min_i} = \Delta z_i = c/2B_i$ dans chaque phase de mesure (voir formule 1bis).

$\Delta z_i$ change suivant les phases, et donc la résolution également. Cela n'est pas un problème, en pratique on aura une résolution en distance qui se dégrade avec la distance en valeur absolue, mais cela est généralement acceptable. Par exemple : résolution de 1mm à 1m, et de 1cm à 10m.

A titre d'exemple, on peut choisir de travailler avec la plus petite résolution :

$$\Delta z = c/(2.B1)$$

pour toutes les phases.

Cela implique donc $z_{maxi} - z_{mini} \leq \Delta z$ quel que soit i.

Sachant que $zmax_i = K.zmin_i$ on peut écrire :

$z_{mini}.(K-1) \leq \Delta z$ quel que soit i.

donc $K \leq \Delta z/z_{mini} + 1$ quelque soit i.

Le pire cas est pour le plus grand $z_{mini}$ donc i=N :

$$K \leq \Delta z/zmin_N + 1.$$

Sachant que $zmin_N = K^{N-1}.zmin$ cela implique :

$$K \leq \Delta z / (K^{N-1}.zmin) + 1.$$

Un cas intéressant est quand $zmin = \Delta z$

Cela permet de choisir K tel que $K^N \leq K^{N-1} + 1$

Cette formule est toujours vraie pour $K \geq 1$.

Plus généralement, si on choisit une résolution $\Delta z$ il faut que $K \leq \Delta z/z_{minN} + 1$ pour que toutes les phases suivantes respectent cette résolution. Cela va dans le sens ou K doit tendre vers 1 si on souhaite de meilleures résolutions.

Dans le cas de l'invention d'une fréquence de la source optique modulée en multichirp, une fréquence de décalage unique fd0, choisie dans l'intervalle $[f_{Rmin};f_{Rmax}]$, permet d'annuler la fréquence de battement fs pour une sous phase Ci associée à l'intervalle de distance $[z_{mini} ; z_{maxi}]$ compris dans l'excursion en distance du lidar souhaité $[z_{min} ; z_{max}]$. En d'autres termes, pour chaque sous phase Ci fs va s'annule pour les distances comprises en $z_{mini}$ et $z_{maxi}$ de ladite sous phase.

Les fréquences $f_{Rmin}$ et $f_{Rmax}$ sont respectivement les fréquences du signal de battement hétérodyne minimale et maximale dans le cas multichirp en l'absence de dispositif de décalage de fréquence (correspondant à zmin et zmax).

Un exemple du décalage de fréquence fd0 appliqué est illustré figure 8 pour une modulation de la source laser telle qu'illustrée sur la figure 4.

Puis on identifie, au niveau de la détection, le moment auquel la fréquence de battement devient nulle ou minimisée (le moment est en fait une plage temporelle pour pouvoir mesurer une fréquence). Pour identifier ce moment, selon un mode de réalisation on détecte que le niveau continu du signal mesuré est différent du niveau continu du signal sans modulation (signal ambiant), car il est additionné à ce dernier (voir plus loin).

Une fois ce moment identifié on détermine la paire de paramètres $(Bi_0, Ti_0)$ correspondant à fréquence instantanée de la source laser appliquée, qui contient l'information de distance z à mesurer:

$$fd0 = f_{opt-l} - f0_{opt-LOd} = \frac{2.Bi_0.z}{c.Ti_0}$$

Soit

$$z = \frac{c.Ti_0.fd0}{2.Bi_0} \qquad (19)$$

La fréquence de décalage fd0 est choisie entre $f_{Rmax}$ et $f_{Rmin}$.

Ainsi, avec un lidar multichirp selon l'invention on ne mesure plus une fréquence hétérodyne mais on détermine un moment pour lequel la fréquence du signal détecté est nulle ou minimale (ou pour lequel le signal détecté est différent du signal continu ambiant). Cette détermination s'effectue avec un circuit de lecture CL local au niveau du pixel simplifié. On bénéficie également de l'augmentation du rapport signal sur bruit inhérente au lidar multichirp.

La figure 9 illustre un système lidar cohérent 10 selon l'invention. Il comprend une source laser SL configurée pour générer un rayonnement laser L avec une fréquence optique laser $f_{opt-l}$ variant linéairement sur une pluralité de N plages de fréquence successives indicées i, avec N supérieur ou égal à 2. Une plage de fréquence présentant une largeur Bi et une durée Ti, une somme de toutes lesdites plages de fréquence correspondant à une durée globale T, une valeur absolue d'un rapport Bi/Ti étant différente pour chaque plage de fréquence, tel que décrit précédemment.

Le lidar 10 comprend également un premier dispositif optique D1 configuré pour séparer spatialement le rayonnement laser L en un faisceau de référence Lref et un faisceau objet Lo dirigé vers la scène à observer Sc, un dispositif de détection Det comprenant au moins un pixel P comprenant un composant photo-détecteur PD. Le lidar 10 comprend également un deuxième dispositif optique D2 configuré pour fournir simultanément audit pixel un faisceau recombiné Lrecomb correspondant à une superposition du faisceau de référence Lref et d'un faisceau réfléchi par la scène Lo,r lorsqu'elle est illuminée par le faisceau objet.

Le lidar 10 comprend également un dispositif de décalage de fréquence FSD disposé sur le trajet du faisceau de référence et configuré pour décaler la fréquence optique laser d'une fréquence de décalage fd0 comprise dans l'intervalle $[f_{Rmin}, f_{Rmax}]$.

On a $f_{Rmax}$ et $f_{Rmin}$ correspondant respectivement à la fréquence hétérodyne de battement associée à une distance maximum de mesure zmax et à une distance minimum de mesure zmin en l'absence du dispositif de décalage FSD. La fréquence du faisceau de référence en sortie du dispositif de modulation est dénommée fréquence référence décalée $f_{opt-Lod}$.

Le lidar 10 comprend également une unité de traitement UT configurée pour piloter la source laser (via son circuit de commande CCL) et qui est reliée au dispositif de détection Det.

Le système lidar cohérent 10 selon l'invention est en outre configuré pour déterminer une information de distance à partir d'un signal détecté Spix par le pixel P. L'information de distance z associée à P (distance du lidar 10 au point de la scène dont le signal réfléchi est détecté par P) est déterminée à partir des valeurs $Bi_0$ et $Ti_0$ de la plage de fréquence optique laser appliquée au moment où la fréquence de battement fs du signal détecté est annulée ou minimisée, comme expliqué précédemment.

L'unité de traitement UT, connectée au circuit de commande de la source laser CCL, permet l'identification de la plage de fréquence de paramètres $(Bi_0, Ti_0)$, une fois le moment d'annulation de fs déterminé par le circuit de lecture CL.

Selon une première variante illustrée figure 10, le système cohérent selon l'invention comprenant en outre un dispositif de balayage SD configuré pour éclairer la scène avec le faisceau objet point par point (premier mode de réalisation). Selon un deuxième mode de réalisation le dispositif SD éclaire la scène ligne à ligne.

Dans le premier mode de réalisation, il convient d'éclairer chaque point de la scène pendant une durée au moins égale à T (pour que l'identification de fs nulle/minimale soit possible) et le détecteur comprend un seul pixel.

Dans le deuxième mode de réalisation, il convient d'éclairer la scène selon avec une ligne pendant une durée au moins égale à T, et le détecteur comprend une barrette de pixels.

Selon une deuxième variante illustrée figure 11, le système lidar cohérent 10 selon l'invention présente une architecture telle que décrite dans le document WO2021144357 et rappelée figure 3. La source laser et/ou le premier dispositif optique D1 sont configurés pour illuminer l'ensemble de la scène, et le détecteur comprend une pluralité de pixels Pij répartis en matrice. Le deuxième dispositif optique D2 est configuré pour superposer, au niveau du photo-détecteurPDij de chaque pixel, le faisceau référence Lref/pix et le faisceau réfléchi par la scène Lo,r/pix selon une direction de propagation sensiblement identique. Le dispositif D2 comprend typiquement pour cela un dispositif optique de recombinaison DR et un système optique d'imagerie Im tels que décrits précédemment.

Selon un mode de réalisation, le dispositif de décalage de fréquence FSD disposé sur le trajet du faisceau de référence (oscillateur local) est un modulateur acousto-optique AOM illustré figure 12. Un modulateur acousto-optique repose sur le principe de l'effet photo-élastique. Une onde acoustique de fréquence $f_{RF}$ se propage dans un matériau ce qui perturbe faiblement les paramètres optiques de ce matériau et crée un réseau de pas A, longueur d'onde de l'onde acoustique. Le faisceau optique incident est dévié par le réseau (diffraction) proportionnellement à la fréquence de l'onde acoustique qui se propage dans le matériau. De plus la fréquence optique du faisceau dévié est décalée de la valeur de la fréquence de l'onde acoustique $f_{RF}$.

Le régime le plus souvent utilisé dans les modulateurs de type AOM est le régime de Bragg ou seul le premier ordre $\pm 1$ de diffraction existe. Ce régime est obtenu lorsque l'extension angulaire de l'onde acoustique est très petite (une onde acoustique plane). Pour obtenir une diffraction maximale l'angle d'incidence de l'onde optique doit respecter la formule de bragg :

$$sin\theta_B \approx \theta_B = \frac{\lambda_{opt}}{2\Lambda}.$$

$\lambda_{opt}$ la longueur d'onde du faisceau optique, A la longueur d'onde l'onde acoustique et $\theta_B$ l'angle d'incidence de Bragg du faisceau optique.

De plus, dans un milieu isotrope l'angle de diffraction du premier ordre (+ 1 ou -1) $\alpha = 2\theta_B$.

De manière connue on a :

$$\alpha = \frac{\lambda_{opt} \cdot f_{RF}}{V}.$$

V vitesse de l'onde acoustique dans le matériau.

On peut ainsi décaler la fréquence de l'onde fopt-l d'une valeur égale à $f_{RF}$. Lorsque l'onde optique est diffractée selon l'ordre +1 la fréquence $f_{RF}$ s'ajoute à la fréquence optique et lorsque l'onde optique est diffractée selon l'ordre -1 la fréquence $f_{RF}$ s'e retranche à la fréquence optique. Comme il est souhaité ici une diminution de la fréquence référence laser fopt-l on utilise l'AOM dans son ordre - 1 de diffraction tel qu'illustré figure 12, et la fréquence $f_{RF}$ est choisie égale à la fréquence fd0.

Lorsque la fréquence $f_{RF}$ est modulée l'angle de diffraction varie selon $\Delta\alpha$ et la fréquence de l'onde optique est également modulée. Cette propriété n'est pas utilisée ici.

Il est possible que l'obtention de la fréquence de décalage souhaitée ne puisse pas s'obtenir avec un seul modulateur acousto-optique. Selon un mode de réalisation le dispositif de décalage de fréquence comprend deux modulateurs acousto-optique ou plus, fonctionnant sur les ordres -1 ou +1 en fonction de la fréquence de décalage souhaitée.

On peut également utiliser un déflecteur acousto optique en photonique sur silicium. D'autres types de dispositifs de décalage de fréquence peuvent également être utilisés.

En espace libre, il est possible de faire un décalage de fréquence optique avec plus ou moins de lames $\lambda/2$ ou $\lambda/4$ disposées sur le parcours d'une onde optique et qui sont en rotation avec des fréquences angulaires connues. Le décalage en fréquence de l'onde optique passant à travers ces lames est proportionnel aux fréquences angulaires de rotation.

En photonique intégrée, il existe principalement deux manières pour réaliser un décalage en fréquences. La modulation type serrodyne ou la modulation à bande latérale unique (dite SSB pour « Single Side Band » ).

Pour la modulation serrodyne, un «phase-shifter» (dispositif qui décale la phase) phase) électro-optique est entraîné par un signal en dents de scie avec une amplitude d'entraînement crête à crête qui conduit exactement à un déphasage de $2\pi$ de la porteuse optique. Il en résulte un déphasage qui est linéaire par morceaux dans le temps et conduit donc à un décalage de fréquence qui correspond à la fréquence fondamentale du signal de commande en dents de scie. Il est aussi possible d'utiliser des « phase-shifters » thermo-optiques au lieu des « phase-shifters » électro-optiques.

Dans le cas de la modulation SSB, deux modulateurs Mach-Zehnder sont combinés avec un déphasage de $\pi/2$ pour former un modulateur optique IQ. Les modulateurs Mach-Zehnder en phase (I) et en quadrature (Q) sont respectivement pilotés avec un signal sinus et un signal cosinus, ce qui, dans le régime des petits signaux, conduit à un décalage de fréquence qui correspond à la fréquence des signaux de pilotage sinusoïdaux.

Le traitement pour déterminer le moment pour lequel la fréquence de de battement fs du signal détecté Spix est minimale ou nulle est préférentiellement réalisé, au moins en partie, au niveau du pixel dans un circuit de lecture dédié CL. Le pixel P comprend un photodétecteur PD configuré pour générer un signal électrique Spix, typiquement à partir du photocourant hétérodyne $i_{PD}$ (voir figure 2), dont l'amplitude dépend de l'intensité du faisceau optique détecté.

Comme illustré figures 9 et 10 le circuit de lecture dédié CL est couplé au photodétecteur PD qui délivre un signal Spix.

Selon un mode de réalisation du circuit CL adapté pour un détecteur matriciel, on détecte avant le signal Spix un signal de référence REF qui correspond au signal issu de la scène sans modulation de la fréquence optique. Pour cela la fréquence optique du rayonnement laser généré n'est pas modulée pendant une durée T0 antérieure aux durées Ti, telle qu'illustré figure 13. La non modulation du faisceau laser pendant une durée T0 juste avant l'application des modulations pendant les sous-phases Ci, est dénommée phase de calibration. Le signal détecté par le photodétecteur pendant cette durée T0 est dénommé signal de référence REF.

À partir de l'équation des interférences, on a :

-Pour un signal modulé de la source laser et un signal détecté correspondant à une distance qui n'est pas correcte, on détecte un signal I tel que :

$$I = I_1 + I_2 + 2\eta\sqrt{I_1 I_2}\cos(2\pi f_s t + \varphi)$$

Avec :

I1 intensité provenant de la scène,
I2 intensité du faisceau référence/ oscillateur local décalé,
$\eta$ rendement hétérodyne,
$f_s$ fréquence du signal de battement,
$\varphi$ déphasage entre les deux voies.

La partie continue DC de ce signal est ainsi :

$$DC = I_1 + I_2$$

Ceci est vrai en supposant que l'intégration de la partie AC va donner zéro, ce qui suppose que Ti corresponde à un nombre entier d'oscillations.

-Pour un signal modulé de la source laser et une distance z recherchée (formule 19), on détecte un signal tel que :

$$I = I_1 + I_2 + 2\eta\sqrt{I_1 I_2}\cos(\varphi) \qquad (\text{fs} = 0)$$

La partie continue de ce signal est ainsi :

$$DC = I_1 + I_2 + 2\eta\sqrt{I_1 I_2}\cos(\varphi)$$

A noter que $\varphi$ est le déphasage entre les deux voies, qui peut être n'importe où entre 0 et $2\pi$, donc la composante DC supplémentaire par rapport au cas précédent peut être positive, négative ou nulle.

-Pour un signal de la source laser non modulé on détecte $I = I_1 + I_2$ et la composante continue est $DC = I_1 + I_2$.

En conclusion, il faut donc détecter la partie

$$I_{sig} = 2\eta\sqrt{I_1 I_2}\cos(\varphi) \ qui \ se \ superpose \ au \ DC = I_1 + I_2.$$

En d'autres termes si le pixel détecte une distance égale à z de l'expression (19), son signal est égal au signal de référence REF plus un « delta » correspondant au signal additionnel $I_{sig}$.

La détection de l'instant pour lequel pour un pixel le signal détecté Spix est continu s'effectue ainsi à l'aide du signal REF, de la manière illustrée figure 14, en détectant un « delta » tel que défini ci-dessus.

On utilise le fait que puisque le signal à mesurer est continu, une simple intégration de durée égale à Ti récupère le signal à détecter à chaque sous-période.

Un intégrateur INTEG réalise une intégration des signaux REF et SIG, respectivement dénommée REF' et SIG' pour chaque sous période Ti (sous-phase Ci). La sous-phase courante Ci lors de l'intégration est identifiée par le circuit CL, c'est-à-dire que les valeurs (Bi, Ti) courantes sont mémorisées.

A chaque intégration, si le signal intégrée Spix' est différent de la référence intégrée REF', REF' et SIG' à l'entrée du comparateur COMP déclenche celui-ci et sa sortie outc donne l'ordre au bloc logique CLOG de fournir l'adresse du pixel (Xadd, Yadd) (en dialoguant avec le système de lecture). En effet lorsque la fréquence de modulation est nulle le signa détecté intégré Spix' est différent du signal REF', comme expliqué plus haut.

On attribue à ce pixel la valeur de z calculée avec les valeurs (Bi, Ti) courantes, et cette valeur et stockée dans une mémoire. Une fois le pixel est lu, il est désactivé pour le reste de la trame. De cette manière, à chaque sous-période Ti, tous les pixels qui se trouvent à cette même distance sont lus et désactivés. À la fin du signal multi-chirp, une image de profondeur est disponible sur l'ensemble de la matrice. On peut ainsi obtenir une carte de profondeur à la cadence vidéo.

Cette architecture permet de générer des histogrammes de distance de la scène en temps réel. En comptant le nombre de pixels à chaque valeur de distance dans une mémoire, on obtient la distribution des valeurs de profondeur de la scène. Ceci peut être utile pour ajuster et optimiser le signal « multichirp » afin de viser la gamme de distances à détecter.

De la même manière, il est possible de viser une seule distance ou une gamme réduite afin d'obtenir une cadence plus rapide.

Selon ce mode de réalisation, le circuit CL comprend ainsi un intégrateur INTEG qui intègre REF et Spix, dont le résultat est les singaux intégrés REF' et Spix', un comparateur COMP qui bascule à l'état haut lorsque Sipx'>REF' et un bloc logique CLOG qui fournit l'adresse (Xadd, Yadd) du pixel en question lorsque le comparateur est à l'état haut.

Selon un autre aspect, l'invention concerne méthode d'acquisition d'une distance z d'un système lidar cohérent 10 à une scène.

Dans une première étape, on génère un rayonnement laser L avec une fréquence optique laser $f_{opt-l}$ variant linéairement sur une pluralité de N plages de fréquence successives indicées i telle que décrite précédemment.

Puis, on sépare spatialement le rayonnement laser L en un faisceau de référence Lref et un faisceau objet Lo dirigé vers une scène à observer (Sc) et on illumine la scène avec le faisceau objet.

Dans le même temps, on décale la fréquence optique laser du faisceau de référence d'une fréquence de décalage fd0 comprise dans l'intervalle $[f_{Rmax}, f_{Rmin}]$, avec $f_{Rmax}$ et $f_{Rmin}$ correspondant respectivement à une fréquence hétérodyne de battement associée à une distance maximum de mesure zmax et à une distance minimum de mesure zmin en l'absence du décalage de la fréquence optique laser du faisceau de référence .

On fournit simultanément à au moins un pixel P du dispositif de détection Det, un faisceau recombiné Lrecomb correspondant à une superposition du faisceau de référence Lref et d'un faisceau réfléchi par la scène Lo,r), on détecte le faisceau recombiné et on génère un signal détecté Spix.

Dans une étape de traitement tout d'abord on détermine, à partir du signal détecté, un moment où la fréquence de battement fs du signal détecté est annulée ou minimisée. Puis on détermine des valeurs $Bi_0$ et $Ti_0$ de la plage de la fréquence optique laser appliquée audit moment et enfin on détermine une information de distance z à partir des valeurs $Bi_0$ et $Ti_0$.

Selon un mode de réalisation à l'étape A, la fréquence optique du rayonnement laser généré n'est pas modulée pendant une durée T0 antérieure aux durées Ti (phase de calibration). A l'étape E on détecte un signal dit de référence REF pendant la durée T0 que l'on mémorise. Et l'étape F comprend une sous étape de comparaison dans laquelle, pour chaque sous phase, on compare le signal de référence intégré REF' et le signal détecté intégré Spix' pendant ladite sous phase.

## Revendications

1. Système lidar cohérent (10) comprenant :

   - une source laser (SL) configurée pour générer un rayonnement laser (L) avec une fréquence optique laser $f_{opt-l}$ variant linéairement sur une pluralité de N plages de fréquence successives indicées i, avec N supérieur ou égal à 2, une plage de fréquence présentant une largeur Bi et une durée Ti, une somme de toutes lesdites plages de fréquence correspondant à une durée globale (T), une valeur absolue d'un rapport Bi/Ti étant différente pour chaque plage de fréquence,
   - un premier dispositif optique (DO1) configuré pour séparer spatialement le rayonnement laser (L) en un faisceau de référence (Lref) et un faisceau objet (Lo) dirigé vers une scène à observer (Sc),
   - un dispositif de détection (Det) comprenant au moins un pixel (P) comprenant un composant photo-détecteur (PD),
   - un deuxième dispositif optique (DO2) configuré pour fournir simultanément audit pixel un faisceau recombiné (Lrecomb) correspondant à une superposition du faisceau de référence (Lref) et d'un faisceau réfléchi par la scène (Lo,r) lorsqu'elle est illuminée par le faisceau objet,

- un dispositif de décalage de fréquence (FSD) disposé sur le trajet du faisceau de référence et configuré pour décaler la fréquence optique laser d'une fréquence de décalage (fd0) comprise dans l'intervalle [$f_{Rmax}$, $f_{Rmin}$], avec $f_{Rmax}$ et $f_{Rmin}$ correspondant respectivement à une fréquence hétérodyne de battement associée à une distance maximum de mesure (zmax) et à une distance minimum de mesure (zmin) en l'absence dudit dispositif de décalage de fréquence,
- une unité de traitement (UT) configurée pour piloter la source laser et reliée au dispositif de détection,
- le système d'imagerie lidar cohérent étant en outre configuré pour déterminer une information de distance à partir d'un signal détecté (Spix) par ledit pixel (P), l'information de distance étant déterminée à partir des valeurs $Bi_0$ et $Ti_0$ de la plage de fréquence optique laser appliquée au moment où une fréquence de battement (fs) du signal détecté est annulée ou minimisée.

2. Système lidar cohérent selon la revendication précédente dans lequel chaque plage de fréquence indicée i correspond à une plage de distance du capteur à la scène $\Delta zi$ allant de $z_{mini}$ à $z_{maxi}$ avec $z_{mini} < z_{maxi}$, et dans lequel les rapports Bi/Ki sont déterminés de sorte que pour i allant de 1 à N-1, on a :

$$z_{max_i} = z_{min_{i+1}}$$

avec :

$$Ki = \frac{z_{max_i}}{z_{min_i}}$$

3. Système lidar cohérent selon l'une des revendications précédentes dans lequel les durée Ti sont toutes identiques

4. Système lidar cohérent selon l'une des revendications précédentes dans lequel les largeurs Bi vérifient la relation :

$$B_i = K. B_{i+1}$$

K réel supérieur à 1

5. Système lidar cohérent selon la revendication précédente comprenant en outre un dispositif de balayage (SD) configuré pour éclairer point par point ou ligne par ligne la scène avec le faisceau objet.

6. Système lidar cohérent selon l'une des revendications 1 à 4 dans lequel la source laser et/ou le premier dispositif optique sont configurés pour illuminer l'ensemble de la scène, dans lequel le détecteur comprend une pluralité de pixels (Pij) répartis en matrice, dans lequel le deuxième dispositif optique est configuré pour superposer, au niveau du photo-détecteur (PDij) de chaque pixel, le faisceau référence (Lref/pix) et le faisceau réfléchi par la scène (Lo, r/pix) selon une direction de propagation sensiblement identique.

7. Système lidar cohérent selon l'une des revendications précédentes dans lequel le dispositif de décalage de fréquence (FSD) comprend au moins un modulateur acousto-optique (AOM) fonctionnant dans l'ordre -1.

8. Système lidar cohérent selon l'une des revendications précédentes dans lequel une modulation sur la plage de fréquence i est dénommée sous-phase i, et dans lequel chaque pixel comprend un circuit de lecture (CL) couplé au photodétecteur (PD), le circuit de lecture comprenant :

- un intégrateur (INTEG) qui intègre, à chaque sous phase, un signal de référence (REF) détecté par le pixel lorsque le faisceau laser n'est pas modulé en fréquence et le signal pixel détecté pendant ladite sous-phase,
- un comparateur (COMP) qui compare le signal de référence intégré (REF') et le signal pixel intégré (Spix'), et bascule à l'état haut lorsque le signal pixel intégré est différent du signal référence intégré, et
- un bloc logique (CLOG) qui fournit l'adresse (Xadd, Yadd) dudit pixel lorsque le comparateur est à l'état haut.

9. Méthode d'acquisition de distance (z) d'un système lidar cohérent (10) à une scène, comprenant les étapes consistant à :

- **A** générer un rayonnement laser (L) avec une fréquence optique laser $f_{opt-l}$ variant linéairement sur une pluralité de N plages de fréquence successives indicées i, une plage de fréquence présentant une largeur Bi et une durée Ti, une somme de toutes lesdites plages de fréquence correspondant à une durée globale (T), une valeur absolue d'un rapport Bi/Ti étant différente pour chaque plage de fréquence,
- **B** séparer spatialement le rayonnement laser (L) en un faisceau de référence (Lref) et un faisceau objet (Lo) dirigé vers une scène à observer (Sc),
- **C** illuminer la scène avec le faisceau objet,
- **D** décaler la fréquence optique laser du faisceau de référence d'une fréquence de décalage (fd0) comprise dans l'intervalle [$f_{Rmax}$, $f_{Rmin}$], avec $f_{Rmax}$ et $f_{Rmin}$ correspondant respectivement à une fréquence hétérodyne de battement associée à une distance maximum de mesure (zmax) et à une distance minimum de mesure (zmin) en l'absence dudit décalage de la fréquence optique laser dudit faisceau de référence ,
- **E** fournir simultanément à au moins un pixel (P) d'un dispositif de détection, un faisceau recombiné (Lrecomb) correspondant à une superposition du faisceau de référence (Lref) et d'un faisceau réfléchi par la scène (Lo, r), détecter ledit faisceau recombiné et générer un signal détecté(Spix),
- **F** déterminer, à partir du signal détecté (Spix), un moment où une fréquence de battement (fs) du signal détecté est annulée ou minimisée,
- **G** déterminer des valeurs $Bi_0$ et $Ti_0$ de la plage de la fréquence optique laser appliquée audit moment,
- **H** déterminer une information de distance (z) à partir desdites valeurs $Bi_0$ et Tic.

10. Méthode d'acquisition de distance selon la revendication précédente dans lequel une modulation sur la plage de fréquence i est dénommée sous-phase i, dans lequel à l'étape **A** la fréquence optique du rayonnement laser généré n'est pas modulée pendant une durée T0 antérieure aux durées Ti, dans lequel à l'étape **E** on détecte un signal dit de référence pendant la durée T0, et dans lequel l'étape **F** comprend une sous étape de comparaison dans laquelle, pour chaque sous phase, on compare le signal de référence intégré et le signal détecté intégré pendant ladite sous phase.

EP 4 390 449 A1

FIG.1

18

FIG.2

FIG.3

EP 4 390 449 A1

FIG.4

FIG.4bis

FIG.5

FIG.6

FIG.7

FIG.8

FIG.9

FIG.10

Sc

$L_{o,r}$

z

$L_o$

FSD

DS

DR

10

$L_{ref}$, $f_{opt-\ell}$

$L_{ref}$, $f_{opt-LOd}$

Im

D1

$L_{recomb}$

D2

L

$f_{opt-\ell}$

$L_{o,r/pix}$

$L_{ref/pix}$

Det

SL

f

t

Pij

PDij

UT

FIG.11

FIG.12

EP 4 390 449 A1

FIG.13

FIG.14

Europäisches
Patentamt

European
Patent Office

Office européen
des brevets

# RAPPORT DE RECHERCHE EUROPEENNE

Numéro de la demande

**EP 23 21 9454**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2006/227316 A1 (GATT PHILLIP [US]) 12 octobre 2006 (2006-10-12) * figures 7-9 * * alinéas [0024], [0054], [0060], [0062], [0065], [0066] * ----- | 1-10 | INV. G01S7/481 G01S7/4914 G01S7/4915 G01S7/4912 G01S17/34 G01S17/42 |
| A | US 2020/200903 A1 (SINGER SCOTT [US] ET AL) 25 juin 2020 (2020-06-25) * figures 3-5, 7 * * alinéas [0008], [0023], [0035] – [0038], [0040], [0045], [0046] * ----- | 1-10 | |
| A | US 7 986 397 B1 (TIEMANN BRUCE G [US] ET AL) 26 juillet 2011 (2011-07-26) * abrégé * * colonne 18, ligne 48 – colonne 19, ligne 23 * ----- | 1-10 | |

**DOMAINES TECHNIQUES RECHERCHES (IPC)**

**G01S**

Le présent rapport a été établi pour toutes les revendications

| Lieu de la recherche | Date d'achèvement de la recherche | Examinateur |
|---|---|---|
| Munich | 15 avril 2024 | Rodríguez González |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 23 21 9454**

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**15-04-2024**

| Document brevet cité au rapport de recherche | Date de publication | Membre(s) de la famille de brevet(s) | Date de publication |
|---|---|---|---|
| US 2006227316 A1 | 12-10-2006 | AUCUN | |
| US 2020200903 A1 | 25-06-2020 | CN 113661410 A | 16-11-2021 |
| | | EP 3881099 A1 | 22-09-2021 |
| | | US 2020200903 A1 | 25-06-2020 |
| | | US 2020200904 A1 | 25-06-2020 |
| | | US 2022113415 A1 | 14-04-2022 |
| | | WO 2020131337 A1 | 25-06-2020 |
| US 7986397 B1 | 26-07-2011 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021144357 A

- FR 2207829